# EUROPEAN PATENT SPECIFICATION

(11) **EP 3 346 829 B1**
(45) Date of publication and mention of the grant of the patent: **25.05.2022**
(21) Application number: 16766095.0
(22) Date of filing: 06.09.2016
(51) Int. Cl.: A01K 7/04

(54) **AN ANIMAL DRINKER**
TIERTRÄNKE
ABREUVOIR POUR ANIMAUX

(30) Priority: 08.09.2015 IE 20150284
(43) Date of publication of application: 18.07.2018
(73) Proprietor: J.F.C. Manufacturing Co. Limited, County Galway (IE)
(72) Inventor: O'BRIEN, Dermot Martin, County Galway (IE); CONCANNON, John Francis, County Galway (IE); CONCANNON, Colm Vincent, County Galway (IE)
(74) Representative: Gorman, Francis Fergus
(86) International application number: PCT/IE2016/000015
(87) International publication number: WO 2017/042795

(56) References cited:
- WO-A1-99/05905
- GB-A- 238 019
- US-A- 1 854 117
- US-A- 3 101 071

## Description

The present invention relates to an animal drinker, and in particular, though not limited to an animal drink bowl.

Animal drinkers are provided in order to provide a supply of drinking water to animals, and typically, are provided in the form of an animal drink bowl or a drink trough.

Drink bowls, in general, are secured to a wall or structure, and in general comprise a bowl which typically is divided into two compartments, namely, a drink compartment in which drinking water is accessible to an animal, and a level control compartment within which a float valve is provided, and from which a supply of water is delivered to the bowl, with the level of water controlled by the float control valve. A communicating opening is generally provided between the drink compartment and the level control compartment in order to maintain the level of water in the drink compartment at a similar level to the level of water in the level control compartment. The level control compartment in general is closed in order to prevent animals gaining access to the float control valve.

Animal drink troughs in general comprise an elongated trough in which water in the trough is accessible to animals, and in general, a level control compartment is located at one end of the drink trough into which a supply of water is delivered through a float control valve. The level control compartment communicates with the remainder of the trough through a communicating opening in order to maintain the water level in the trough substantially similar to the level of water in the level control compartment.

In general, due to the nature of the environment within which they are located, in some cases within an intensive animal rearing shed, and in other cases in the open, dust, dirt and other foreign matter tends to collect in the drink compartment of such animal drinkers, and indeed in some cases in the level control compartment. A disadvantage of such animal drinkers is that in general it is relatively difficult to clean such drinkers and in particular, to remove dust, dirt and other foreign matter from both the drink compartment and in particular, from the level control compartment.

It is, however, known to provide an elongated drink trough in which the drink trough is pivotally mounted to a wall or other structure, and is pivotal through an angle of approximately 90° from an operative state whereby drinking water is presented to animals to a discharge state whereby drinking water in the trough is discharged through the open mouth of the trough and the drink compartment may be wiped clean of debris and other foreign matter. However, in order to permit the drink trough to be pivoted from the operative state to the discharge state, the water supply to the float control valve must be coupled to the float control valve through a flexible conduit in order to accommodate the pivoting of the trough from the operative state to the discharge state. This is undesirable, since the flexible conduit can be snagged by animals, and thus disconnected from the trough, and additionally, with the passage of time, the flexible conduit may deteriorate as a result of pivoting of the trough between the operative state and the discharge state, and in general, the deterioration of the flexible conduit results in cracking of the conduit, which in turn results in water leaking from the flexible conduit. This is undesirable.

PCT Specification No. WO 99/05905 of Booth discloses an animal feeding trough which may contain liquid or other forms of feedstuffs. The trough is pivotally coupled between a pair of upstanding frame members about a substantially central longitudinal axis which extends parallel to the length of the trough for facilitating pivoting of the trough between an operative state for presenting feedstuffs to an animal, or a discharge state for discharging feedstuffs therefrom. A feed supply port for introducing liquid into the trough is also provided.

British Patent Specification No. 238,019 of Bingham discloses a drinking appliance for an animal which comprises a container for drinking water which is pivotally coupled to a support frame. A valve is provided for supplying water to the container. When the container is full of water, the weight of the water pivots the frame downwardly against a spring. As water is drunk from the container reducing the weight thereof, the container is urged upwardly by the spring resulting in the valve being opened to supply more water to the container.

U.S. Patent Specification No. 3,101,071 of Frye discloses an animal waterer which comprises a semi-cylindrical container which is pivotally mounted about an axis defined by the semi-cylindrical container between an operative state for presenting water to an animal and a discharge state for discharging water from the container.

U.S. Patent Specification No. 1,854,117 of Devitt discloses a trough for supplying water to chickens which comprises a pivotally mounted water trough which is located in a substantially rectangular casing. The water trough is pivoted off-centre, and is urged by a spring into a normal position for presenting water to the chickens. A latch which is float actuated releaseably retains the trough in the normal position. On the trough being filled with water, the latch releases the trough to discharge water therefrom for cleaning the trough.

There is therefore a need for an animal drinker which addresses at least some of the problems of known animal drinkers.

The present invention is directed towards providing such an animal drinker.

According to the invention there is provided an animal drinker comprising a support, a container defining a hollow interior region for a drinkable liquid and an open mouth for accommodating a muzzle of an animal to the hollow interior region of the container, and an inlet port for accommodating the drinkable liquid to the hollow interior region of the container, the container being pivotally mounted on the support, and being pivotal relative to the support and the inlet port between an operative state for receiving the drinkable liquid from the inlet port and for presenting the drinkable liquid to an animal, and a discharge state for discharging the liquid therefrom, wherein a mounting means comprising a mounting plate for mounting the support to a structure is provided, the support comprises a support framework extending forwardly from the mounting plate, the inlet port is rigidly secured to the support framework, and the container is pivotally coupled to the support framework to one side thereof about a main pivot axis extending perpendicularly relative to the mounting plate and is pivotal about the main pivot axis through an angle of at least 90° between the operative state and the discharge state.

In one aspect of the invention a retaining means is provided for releaseably retaining the container in the operative state.

Preferably, a level control valve is located upstream of the inlet port, and the drinkable liquid is delivered to the inlet port through the level control valve.

Preferably, the level control valve comprises a float control valve.

Advantageously, the container is pivotal through an angle of at least 135° between the operative state and the discharge state, and preferably through an angle of up to approximately 180°.

Advantageously, the hollow interior region of the container is divided by a partition wall into a drink compartment in which the drinkable liquid is accessible through the open mouth, and a level control compartment in which a float of the float control valve is accommodated. Advantageously, a communicating opening is provided in the partition wall communicating the drink compartment with the level control compartment.

In another aspect of the invention the framework defines a muzzle accommodating opening for accommodating a muzzle of an animal to the drink compartment when the container is in the operative state.

In another aspect of the invention a closure plate is located in the support for closing a portion of the open mouth of the container which communicates with the level control compartment, and preferably, the closure plate is located in the framework, and advantageously, the closure plate defines with the framework the muzzle accommodating opening.

Preferably, the retaining means is releaseably engageable with the support, and advantageously, is releaseably engageable with the closure plate.

In one aspect of the invention the retaining means comprises a latch, and in another aspect of the invention the retaining means is manually operable.

In one aspect of the invention the animal drinker is configured as an animal drink bowl.

The invention will be more clearly understood from the following description of a preferred embodiment thereof, which is given by way of example only, with reference to the accompanying drawings, in which:
Fig. 1 is a perspective view of an animal drinker according to the invention,
Fig. 2 is another perspective view of the animal drinker of Fig. 1,
Fig. 3 is a front elevational view of the animal drinker of Fig. 1,
Fig. 4 is a side elevational view of the animal drinker of Fig. 1,
Fig. 5 is a side elevational view of the animal drinker of Fig. 1 from the side opposite to that of Fig. 4,
Fig. 6 is a top plan view of the animal drinker of Fig. 1,
Fig. 7 is a cross-sectional front elevational view of the animal drinker of Fig. 1 on the line VII-VII of Fig. 6,
Fig. 8 is a cross-sectional side elevational view of the animal drinker of Fig. 1 on the line VIII-VIII of Fig. 7,
Fig. 9 is a perspective view of the animal drinker of Fig. 1 illustrated in a different state to that of Figs. 1 to 8,
Fig. 10 is a front elevational view of the animal drinker of Fig. 1 illustrated in a state similar to that of Fig. 9, and
Fig. 11 is a front elevational view of the animal drinker of Fig. 1 illustrated in a further different state to that of Figs. 1 to 10.

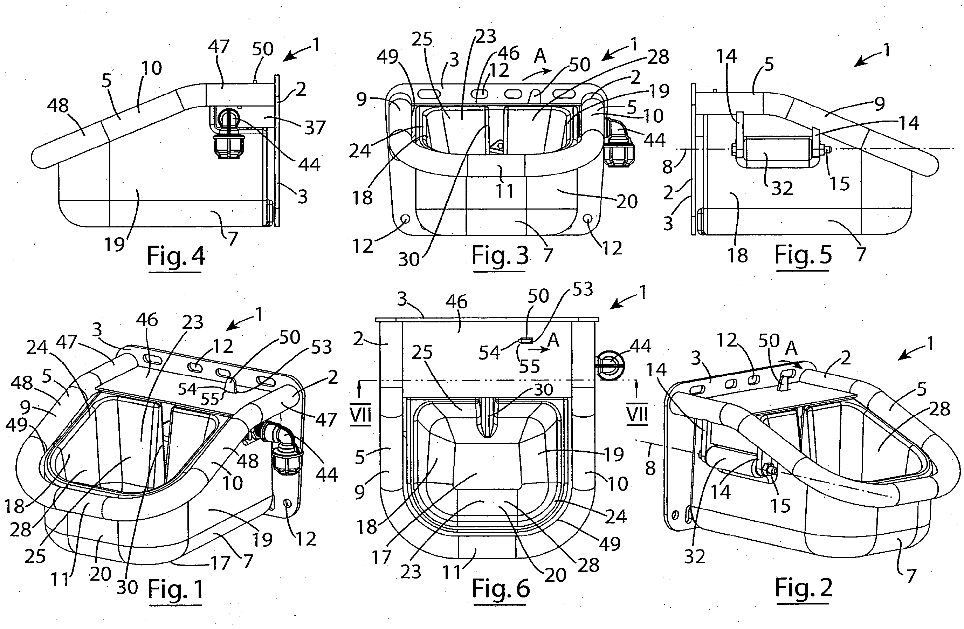

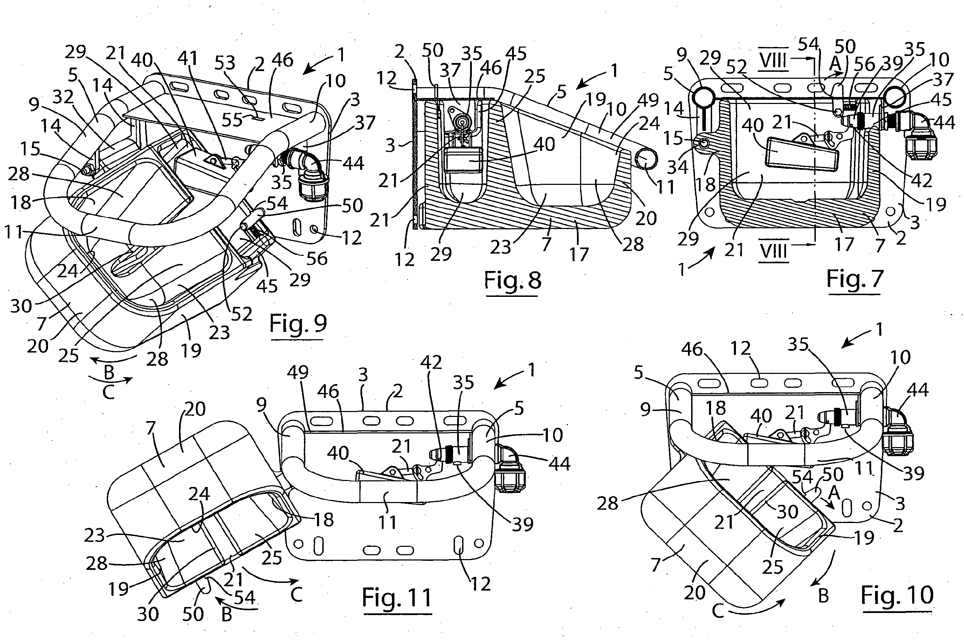

Referring to the drawings, there is illustrated an animal drinker, in this embodiment of the invention an animal drink bowl, indicated generally by the reference numeral 1, for securing to a wall or other structure and for providing a drinkable liquid, in this embodiment of the invention drinking water to an animal, for example, a cow, a calf or the like. The animal drink bowl 1 comprises a support 2 and a mounting means formed by a mounting plate 3 for securing to a wall or other structure for securing the support 2 to a wall or other structure. The support 2 comprises a support framework 5 extending forwardly from the mounting plate 3. A container 7 for the drinking water is movably mounted on the support framework 5, and in this embodiment of the invention is pivotally coupled to the support framework 5 about a main pivot axis 8, which extends perpendicularly relative to the mounting plate 3. The container 7 is pivotal about the main pivot axis 8 between an operative state illustrated in Figs. 1 to 8 for presenting water to an animal, and a discharge state illustrated in Fig. 11 for facilitating discharge of water from the container 7 and also for facilitating the discharge and removal of dirt, debris and other foreign matter from the container 7.

Turning initially to the support 2, the support framework 5 comprises a pair of spaced apart side members 9 and 10 extending forwardly from the mounting plate 3, which are joined by a front cross-member 11. In this embodiment of the invention the support framework 5 is of tubular steel, and the mounting plate 3 is of steel plate material. A plurality of screw accommodating holes 12 formed in the mounting plate 3 accommodate screws or other fixing elements for securing the mounting plate 3 to a wall or other structure to which the drink bowl 1 is to be secured. A pair of spaced apart downwardly extending mounting members 14 of steel plate material extend downwardly from the side member 9 for carrying a main pivot shaft 15, which defines the main pivot axis 8, and to which the container 7 is pivotally connected about the main pivot axis 8 as will be described in more detail below.

The container 7 comprises a base 17, a pair of spaced apart side walls 18 and 19 extending upwardly from the base 17 and joined by spaced apart front and rear end walls 20 and 21 which also extend upwardly from the base 17. The base 17, the side walls 18 and 19 and the front and rear end walls 20 and 21 together define a hollow interior region 23 of the container 7. The side walls 18 and 19 and the front and rear end walls 20 and 21 define an open mouth 24 to the hollow interior region 23. A partition wall 25 extending upwardly from the base 17 across the hollow interior region 23 between the side walls 18 and 19 divides the hollow interior 23 into a forward drink compartment 28 and a rearward level control compartment 29 into which drinking water is delivered, and in which the level of water in the level control compartment 29, and in turn the forward drink compartment 28 is controlled. A communicating opening 30 extending through the partition wall 25 communicates the forward drink compartment 28 with the rearward level control compartment 29 for maintaining the level of water in the drink compartment 28 substantially similar to the level of water in the level control compartment 29.

An elongated mounting bracket 32 extends from and along the side wall 18 of the container 7 and defines an elongated bore 34 through which the main pivot shaft 15 extends for pivotally mounting the container 7 on the main pivot shaft 15 about the main pivot axis 8 between the operative state and the discharge state. In this embodiment of the invention the container 7 together with the mounting bracket 39 are formed in one piece of plastics material, typically, polyethylene material, by a rotational moulding process. In this embodiment of the invention the mounting members 14, the main pivot shaft 15 and the mounting bracket 32 are configured relative to the support framework 5 and the container 7, so that the container 7 is pivotal through almost 180° between the operative state and the discharge state.

A level control valve, which in this embodiment of the invention comprises a float control valve 35, is rigidly mounted on a support plate 37 which in turn is rigidly secured to and extends downwardly from the side member 10 of the support framework 5. The float control valve 35 terminates in a downstream inlet port 39 through which drinking water is supplied into the level control compartment 29 of the container 7 from the float control valve 35. A float 40 of the float control valve 35 is carried on a support arm 21 which in turn is pivotally coupled to the float control valve 35 by a pivot pin 42, so that as the float 40 rises and falls within the level control compartment 29, the supply of water through the float control valve 35 and the inlet port 39 to the level control compartment 29 is controlled in order to control the level of water in the level control compartment 29, and in turn in the drink compartment 28. The operation of such float control valves 35 for controlling water level in a container will be well known to those skilled in the art. An elbow connector 44 which is connected to the float control valve 35 is configured to receive a drinking water supply from a drinking water source, for example, a mains water supply. A downwardly extending slot 45 extends downwardly into the side wall 19 of the container 7 for accommodating the float control valve 35 when the container 7 is in the operative state.

A closure plate 46 of steel plate material is secured to and extends between rearward portions 47 of the side members 9 and 10 of the support framework 5 for closing a portion of the open mouth 28 of the container 7 which communicates with the level control compartment 29 when the container 7 is in the operative state. This prevents access by animals to the level control compartment 29. The closure plate 46 defines with forward portions 48 of the side members 9 and 10 and with the front cross-member 11 a muzzle accommodating opening 49 to the drink compartment 28 for accommodating the muzzle of an animal into the drink compartment 28 for drinking water therefrom.

A retaining means, in this embodiment of the invention a latch 50 is pivotally coupled to the rear end wall 21 of the container 7 by a pivot pin 52 and is releaseably engageable in a receiving slot 53, which is formed in the closure plate 46 for releaseably retaining the container 7 in the operative state. A latching element 54 of the latch 50 is releaseably engageable with the closure plate 46 adjacent an end 55 of the receiving slot 53 when the container is in the operative state for releaseably retaining the container in the operative state. A compression spring 56 acting between the latch 50 and the side wall 19 of the container 7 urges the latch 50 into a latching state with the latching element 54 engaging the closure plate 46 adjacent the end 55 of the receiving slot 53 for in turn releaseably retaining the container 7 in the operative state.

In use, with the drink bowl 1 mounted by the mounting plate 3 to a wall or other structure, and a drinking water supply connected to the elbow connector 44, and with the container 7 in the operative state and releaseably retained therein by the latch 50, the drink bowl 1 is ready for use. Water is supplied through the float control valve 35 into the level control compartment 29 where the level of water in the level control compartment 29 and in turn in the drink compartment 28 is controlled by the float control valve 35. As animals drink from the drink compartment 28, the float control valve 35 maintains the water level in the level control compartment 29 and in turn in the drink compartment 28 substantially constant.

When it is desired to clean the container 7, the latch 50 is manually pivoted in the direction of the arrow A in order to disengage the latch element 54 from the closure plate 46 adjacent an end 55 of the receiving slot 53. Once the latch element 54 is disengaged from the closure plate 46, the container 7 is pivoted downwardly in the direction of the arrow B about the main pivot axis 8 into the discharge state illustrated in Fig. 11. In the discharge state, water in the drink compartment 28 and in the level control compartment 29 is discharged from the container 7 through the open mouth 24 thereof, and dirt, debris and other foreign matter located in the drink compartment 28 and the level control compartment 29 is similarly discharged from the drink and level control compartments 28 and 29 through the open mouth 24. The two compartments 28 and 29 can then be wiped clean. When cleaned, the container 7 is pivoted in the direction of the arrow C from the discharge state to the operative state. As the container 7 is being urged into the operative state, the latch 50 engages the receiving slot 53, and when the container 7 is fully urged into the operative state, the compression spring 56 urges the latching element 54 of the latch 50 into engagement with the closure plate 46 adjacent the end 55 of the receiving slot 53, so that the latch 50 is releaseably secured in the receiving slot 53 for in turn releaseably retaining the container 7 in the operative state.

In this embodiment of the invention the container 7 is pivotal about the main pivot axis 8 through an angle of up to approximately 180° between the operative state and the discharge state, and in general, it is envisaged that the container 7 will be pivoted through an angle of up to almost 180° from the operative state to the discharge state, and at least through an angle of 135° from the operative state to the discharge state, as illustrated in Fig. 11, in order to discharge dirt, debris and other foreign matter from the drink compartment 28 and the level control compartment 29 during cleaning of the container 7.

The advantages of the invention are many. A particularly important advantage of the invention is that the container 7 can be readily easily cleaned by merely pivoting the container 7 from the operative state to the discharge state. In particular, the pivoting of the container from the operative state to the discharge state can be carried out while the float control valve 35 and the elbow connector 44 remain in a fixed state relative to the support 2 of the drink bowl 1. Thus, there is no need for a flexible coupling for connecting a water supply to the elbow connector 44. This is a significant advantage over and above drink bowls known heretofore.

While the drinker has been described as comprising a drink bowl, it will be readily apparent to those skilled in the art that the drinker instead of being provided in the form of a drink bowl, may be provided in the form of an elongated drinking trough. In which case, the container would be configured as an elongated drink trough and would be pivotal relative to an appropriately shaped framework to which the float control valve would be rigidly connected.

It will be appreciated that while the components of the drink bowl according to the invention have been described as being of specific materials, the components may be of any other suitable material, for example, all the components of the drink bowl may be of the same material, such as a metal material, a plastics material, or any other suitable material, or mix of materials. It will also be appreciated that while the support has been described as comprising a support framework, the support framework may be of any other suitable shape and/or construction. Indeed, the mounting means may comprise any other suitable mounting means beside the mounting plate, for example, the mounting means may be provided by a mounting frame or a mounting framework, or a mounting plate of any other suitable shape, size and/or construction.

Needless to say, the container may be of any other suitable shape or configuration, and it will also be appreciated that while it is desirable, it may not be essential in all cases that the container be divided by a partition wall into a drink compartment and a level control compartment. Indeed, it is envisaged that the partition wall dividing the hollow interior region of the container into a level control compartment and a drink compartment instead of being provided by a partition wall located in the container, the partition wall may extend into the container from the support, for example, the partition wall could extend downwardly into the hollow interior region of the container from the closure plate.

While a particular type of level control valve has been described, any other suitable level control valve may be provided. Needless to say, any other suitable connector may be provided for connecting a drinking water supply to the level control valve.

While the animal drinker has been described as being suitable for providing a supply of water to cows, calves and the like, it will be readily apparent to those skilled in the art that the animal drinker may be suitably sized and shaped for many other types of animals, for example, horses, ponies, donkeys, mules, goats, sheep, dogs, cats, and indeed larger animals of the type commonly found in animal zoos.

It will also be appreciated that while the retaining means in this embodiment of the invention for retaining the container in the discharge state has been described as comprising a latch, any other suitable retaining means may be provided, and the retaining means may be manually operable or automatically operable. For example, in certain cases, it is envisaged that the retaining means may comprise a magnet, a clasp or any other suitable retaining means.

## Claims

1. An animal drinker comprising a support (2), a container (7) defining a hollow interior region (23) for a drinkable liquid and an open mouth (24) for accommodating a muzzle of an animal to the hollow interior region (23) of the container (7), and an inlet port (39) for accommodating the drinkable liquid to the hollow interior region (23) of the container (7), the container (7) being pivotally mounted on the support (5), and being pivotal relative to the support (2) and the inlet port (39) between an operative state for receiving the drinkable liquid from the inlet port (39) and for presenting the drinkable liquid to an animal, and a discharge state for discharging the liquid therefrom, wherein a mounting means (3) comprising a mounting plate (3) for mounting the support (2) to a structure is provided, **characterised in that**:
the support
(2) comprises a support framework (5) extending forwardly from the mounting plate (3), the inlet port (39) is rigidly secured to the support framework (5), and the container (7) is pivotally coupled to the support framework (5) to one side thereof about a main pivot axis (8) extending perpendicularly relative to the mounting plate
(3) and is pivotal about the main pivot axis (8) through an angle of at least 90° between the operative state and the discharge state.

2. An animal drinker as claimed in Claim 1 **characterised in that** the container (7) is pivotal through an angle of at least 135° between the operative state and the discharge state.

3. An animal drinker as claimed in Claim 1 or 2 **characterised in that** the container (7) is pivotal through an angle of up to approximately 180° between the operative state and the discharge state.

4. An animal drinker as claimed in any preceding claim **characterised in that** the hollow interior region (23) of the container (7) is divided by a partition wall (25) into a drink compartment (28) in which the drinkable liquid is accessible through the open mouth (24), and a level control compartment (29), and a communicating opening (30) is provided in the partition wall (25) communicating the drink compartment (28) with the level control compartment (29).

5. An animal drinker as claimed in Claim 4 **characterised in that** a level control valve (35) is located upstream of the inlet port (39).

6. An animal drinker as claimed in Claim 5 **characterised in that** the level control valve (35) comprises a float control valve (35).

7. An animal drinker as claimed in Claim 6 **characterised in that** a float (40) of the float control valve (35) is located in the level control compartment (29).

8. An animal drinker as claimed in any of Claims 4 to 7 **characterised in that** the support framework (5) defines a muzzle accommodating opening (49) for accommodating a muzzle of an animal to the drink compartment (28) when the container (7) is in the operative state.

9. An animal drinker as claimed in Claim 8 **characterised in that** a closure plate (46) is located in the support framework (5) for closing a portion of the open mouth (24) of the container (7) which communicates with the level control compartment (29).

10. An animal drinker as claimed in Claim 9 **characterised in that** the closure plate (46) defines with the support framework (5) the muzzle accommodating opening (49).

11. An animal drinker as claimed in any preceding claim **characterised in that** a retaining means (50) is provided for releaseably retaining the container (7) in the operative state.

12. An animal drinker as claimed in Claim 11 **characterised in that** the retaining means (50) is releaseably engageable with the support (2).

13. An animal drinker as claimed in Claim 11 or 12 **characterised in that** the retaining means (50) comprising a latch (50).

14. An animal drinker as claimed in any of Claims 11 to 13 **characterised in that** the retaining means (50) is manually operable.

15. An animal drinker as claimed in any preceding claim **characterised in that** the animal drinker is configured as an animal drink bowl (1).

## Patentansprüche

1. Tiertränke mit einer Halterung (2), einem Behälter (7), der einen hohlen Innenbereich (23) für eine trinkbare Flüssigkeit und ein offenes Mundloch (24) zur Aufnahme einer Schnauze eines Tieres in dem hohlen Innenbereich (23) des Behälters (7) festlegt, und einer Einlassöffnung (39) zur Versorgung des hohlen Innenbereichs (23) des Behälters (7) mit der trinkbaren Flüssigkeit, wobei der Behälter (7) schwenkbar an der Halterung (2) angebracht ist und relativ zur Halterung (2) und der Einlassöffnung (39) zwischen einem Betriebszustand zur Aufnahme der trinkbaren Flüssigkeit aus der Einlassöffnung (39) und zur Darbietung der trinkbaren Flüssigkeit an ein Tier und einem Entleerungszustand zum Entleeren der Flüssigkeit daraus schwenkbar ist, wobei eine Befestigungseinrichtung (3) eine Befestigungsplatte (3) zur Anbringung der Halterung (2) an einer Struktur vorhanden ist, **dadurch gekennzeichnet, dass** die Halterung (2) einen Stützrahmen (5) aufweist, der sich von der Befestigungsplatte (3) nach vorne erstreckt, die Einlassöffnung (39) starr an dem Stützrahmen (5) befestigt ist und der Behälter (7) mit dem Stützrahmen (5) an einer Seite desselben um eine rechtwinklig zur Befestigungsplatte (3) verlaufende Hauptschwenkachse (8) schwenkbar gekoppelt ist und um die Hauptschwenkachse (8) um einen Winkel von zumindest 90 Grad zwischen dem Betriebszustand und dem Entleerungszustand schwenkbar ist.

2. Tiertränke nach Anspruch 1, **dadurch gekennzeichnet, dass** der Behälter (7) um einen Winkel von zumindest 135 Grad zwischen dem Betriebszustand und dem Entleerungszustand schwenkbar ist.

3. Tiertränke nach Anspruch 1 oder 2, **dadurch gekennzeichnet, dass** der Behälter (7) um einen Winkel von bis zu ungefähr 180 Grad zwischen dem Betriebszustand und dem Entleerungszustand schwenkbar ist.

4. Tiertränke nach einem der vorhergehenden Ansprüche, **dadurch gekennzeichnet, dass** der hohle Innenbereich (23) des Behälters (7) durch eine Trennwand (25) in ein Trinkabteil (28), in dem die trinkbare Flüssigkeit durch das offene Mundloch (24) zugänglich ist, und ein Niveausteuerungsabteil (29) unterteilt ist, und dass eine Verbindungsöffnung (30) in der Trennwand (25) vorhanden ist, die das Trinkabteil (28) mit dem Niveausteuerungsabteil (29) verbindet.

5. Tiertränke nach Anspruch 4, **dadurch gekennzeichnet, dass** ein Niveausteuerungsventil (35) stromaufwärts der Einlassöffnung (39) angeordnet ist.

6. Tiertränke nach Anspruch 5, **dadurch gekennzeichnet, dass** das Niveausteuerungsventil (35) ein Schwimmersteuerungsventil (35) umfasst.

7. Tiertränke nach Anspruch 6, **dadurch gekennzeichnet, dass** ein Schwimmer (40) des Schwimmersteuerungsventils (35) in dem Niveausteuerungsabteil (29) angeordnet ist.

8. Tiertränke nach einem der Ansprüche 4 bis 7, **dadurch gekennzeichnet, dass** der Stützrahmen (5) eine Schnauzenaufnahmeöffnung (49) zur Aufnahme einer Schnauze eines Tieres in dem Trinkabteil (28) festlegt, wenn der Behälter (7) in dem Betriebszustand ist.

9. Tiertränke nach Anspruch 8, **dadurch gekennzeichnet, dass** sich in dem Stützrahmen (5) eine Abdeckplatte (46) befindet, um einen Teil des offenen Mundlochs (24) des Behälters (7) zu verschließen, der mit dem Niveausteuerungsabteil (29) in Verbindung steht.

10. Tiertränke nach Anspruch 9, **dadurch gekennzeichnet, dass** die Abdeckplatte (46) mit dem Stützrahmen (5) die Schnauzenaufnahmeöffnung (49) definiert.

11. Tiertränke nach einem der vorhergehenden Ansprüche, **dadurch gekennzeichnet, dass** eine Rückhalteeinrichtung (50) zum lösbaren Halten des Behälters (7) in dem Betriebszustand vorhanden ist.

12. Tiertränke nach Anspruch 11, **dadurch gekennzeichnet, dass** die Rückhalteeinrichtung (50) in lösbarem Eingriff mit der Halterung (2) bringbar ist.

13. Tiertränke nach Anspruch 11 oder 12, **dadurch gekennzeichnet, dass** die Rückhalteeinrichtung (50) einen Riegel (50) umfasst.

14. Tiertränke nach einem der Ansprüche 11 bis 13, **dadurch gekennzeichnet, dass** die Rückhalteeinrichtung (50) manuell bedienbar ist.

15. Tiertränke nach einem der vorhergehenden Ansprüche, **dadurch gekennzeichnet, dass** die Tiertränke als eine Trinkschale (1) für ein Tier ausgeführt ist.

## Revendications

1. Abreuvoir pour animaux comprenant un support (2), un récipient (7) définissant une région intérieure creuse (23) pour un liquide buvable et une bouche ouverte (24) pour recevoir un museau d'un animal dans la région intérieure creuse (23) du récipient (7), et un orifice d'entrée (39) pour recevoir le liquide buvable dans la région intérieure creuse (23) du récipient (7), le récipient (7) étant monté de manière pivotante sur le support (5), et étant pivotant par rapport au support (2) et à l'orifice d'entrée (39) entre un état de fonctionnement pour recevoir le liquide buvable de l'orifice d'entrée (39) et pour présenter le liquide buvable à un animal, et un état de décharge pour décharger le liquide de celui-ci, dans lequel un moyen de montage (3) comprenant une plaque de montage (3) pour monter le support (2) sur une structure est prévu, **caractérisé en ce que** :
le support (2) comprend un cadre de support (5) s'étendant vers l'avant à partir de la plaque de montage (3), l'orifice d'entrée (39) est fixé de manière rigide au cadre de support (5), et le récipient (7) est couplé de manière pivotante au cadre de support (5) sur un côté de celui-ci autour d'un axe de pivot principal (8) s'étendant perpendiculairement par rapport à la plaque de montage (3) et peut pivoter autour de l'axe de pivot principal (8) sur un angle d'au moins 90° entre l'état de fonctionnement et l'état de décharge.

2. Abreuvoir pour animaux selon la revendication 1, **caractérisé en ce que** le récipient (7) peut pivoter d'un angle d'au moins 135° entre l'état de fonctionnement et l'état de décharge.

3. Abreuvoir pour animaux selon la revendication 1 ou 2, **caractérisé en ce que** le récipient (7) peut pivoter d'un angle allant jusqu'à environ 180° entre l'état de fonctionnement et l'état de décharge.

4. Abreuvoir pour animaux selon l'une quelconque des revendications précédentes, **caractérisé en ce que** la région intérieure creuse (23) du récipient (7) est divisée par une paroi de séparation (25) en un compartiment à boisson (28) dans lequel le liquide buvable est accessible par la bouche ouverte (24), et un compartiment de contrôle de niveau (29), et une ouverture de communication (30) est prévue dans la paroi de séparation (25) faisant communiquer le compartiment à boisson (28) avec le compartiment de contrôle de niveau (29).

5. Abreuvoir pour animaux selon la revendication 4, **caractérisé en ce qu'**une vanne de contrôle de niveau (35) est située en amont de l'orifice d'entrée (39).

6. Abreuvoir pour animaux selon la revendication 5, **caractérisé en ce que** la vanne de contrôle de niveau (35) comprend une vanne de contrôle à flotteur (35).

7. Abreuvoir pour animaux selon la revendication 6, **caractérisé en ce qu'**un flotteur (40) de la vanne de contrôle à flotteur (35) est situé dans le compartiment de contrôle de niveau (29).

8. Abreuvoir pour animaux selon l'une quelconque des revendications 4 à 7, **caractérisé en ce que** le cadre de support (5) définit une ouverture de réception de museau (49) pour recevoir un museau d'un animal dans le compartiment de boisson (28) lorsque le récipient (7) est dans l'état de fonctionnement.

9. Abreuvoir pour animaux selon la revendication 8, **caractérisé en ce qu'**une plaque de fermeture (46) est située dans le cadre de support (5) pour fermer une partie de la bouche ouverte (24) du récipient (7) qui communique avec le compartiment de contrôle de niveau (29).

10. Abreuvoir pour animaux selon la revendication 9, **caractérisé en ce que** la plaque de fermeture (46) définit avec le cadre de support (5) l'ouverture de réception de museau (49).

11. Abreuvoir pour animaux selon l'une quelconque des revendications précédentes, **caractérisé en ce qu'**un moyen de retenue (50) est prévu pour retenir de manière libérable le récipient (7) dans l'état de fonctionnement.

12. Abreuvoir pour animaux selon la revendication 11, **caractérisé en ce que** le moyen de retenue (50) peut s'engager de manière libérable avec le support (2).

13. Abreuvoir pour animaux selon la revendication 11 ou 12, **caractérisé en ce que** le moyen de retenue (50) comprend un loquet (50).

14. Abreuvoir pour animaux selon l'une quelconque des revendications 11 à 13, **caractérisé en ce que** le moyen de retenue (50) est actionnable manuellement.

15. Abreuvoir pour animaux selon l'une quelconque des revendications précédentes, **caractérisé en ce que** l'abreuvoir pour animaux est configuré comme un bol pour animaux (1).
